# EUROPÄISCHE PATENTSCHRIFT

(11) **EP 2 686 142 B1**
(45) Veröffentlichungstag und Bekanntmachung des Hinweises auf die Patenterteilung: **29.04.2015**
(21) Anmeldenummer: 12712607.6
(22) Anmeldetag: 15.03.2012
(51) Int. Cl.: B25J 9/16, B25J 17/02

(54) **AKTIVE HANDHABUNGSVORRICHTUNG UND VERFAHREN FÜR KONTAKTAUFGABEN**
ACTIVE HANDLING APPARATUS AND METHOD FOR CONTACT TASKS
DISPOSITIF DE MANIPULATION ACTIF ET PROCÉDÉ DESTINÉ AUX TACHES DE MISE EN CONTACT

(30) Priorität: 16.03.2011 DE 102011005627; 01.04.2011 DE 102011006679
(43) Veröffentlichungstag der Anmeldung: 22.01.2014
(73) Patentinhaber: Ferrobotics Compliant Robot Technology GmbH, 4040 Linz (AT)
(72) Erfinder: NADERER, Ronald, A-4490 St. Florian (AT); FERRARA, Paolo, A-4531 Kematen an der Krems (AT); ROHRHOFER, Andreas, A-3352 St. Peter/Au (AT)
(74) Vertreter: Westphal, Mussgnug & Partner Patentanwälte mbB
(86) Internationale Anmeldenummer: PCT/EP2012/054596
(87) Internationale Veröffentlichungsnummer: WO 2012/123552

(56) Entgegenhaltungen:
- EP-A1- 1 057 592
- US-A- 5 448 146
- US-A- 5 509 848

## Beschreibung

Die Erfindung betrifft eine aktive Handhabungsvorrichtung sowie ein Verfahren für automatisierte Kontaktaufgaben (Manipulier- und Positionieraufgaben) wie z.B. das robotergestützte Bearbeiten von Oberflächen oder Manipulieren von Maschinenelementen oder Werkstücken bei Vorgängen wie z.B. dem Montieren, Stapeln, Sortieren, etc.

Es sind unterschiedliche Vorrichtungen für robotergestützte, automatisierte Kontaktaufgaben wie z.B. das Bearbeiten von Oberflächen (Schleifen, Polieren, etc.) sowie das Manipulieren von Werkstücken oder Maschinenelementen (Stapeln, Palettieren, Montieren, etc.) bekannt. Als Beispiel sei die in der Publikation US 5,299,389 beschriebene Schleifvorrichtung genannt. Bei dieser Vorrichtung wird durch einen Industrieroboter eine rotierende Schleifscheibe auf die zu schleifende Oberfläche hin bewegt. Der Kontakt zwischen Schleifscheibe und Oberfläche wird über den Laststrom des die Schleifscheibe antreibenden Motors erkannt, was eine für viele Anwendungen zu ungenaue Methode darstellt. Generell besteht bei robotergestützten automatisierten Systemen, bei denen der Roboter einen Gegenstand berührt das Problem, den Kontaktzeitpunkt zu erkennen und die Kontaktkraft zu regeln.

Selbst bei modernen, kraftgeregelten Systemen tritt zunächst beim Kontakt zwischen dem am Roboter gelagerten Werkzeug und der zu kontaktierenden Oberfläche eine stoßförmige Kontaktkraft auf, die in vielen Fällen unproblematisch sein mag, jedoch in Anwendungen, bei denen es auf Präzision ankommt oder sehr empfindliche Werkstücke be- oder verarbeitet werden müssen, äußerst störend und unerwünscht ist. Eine Kontaktkraftregelung ist erst möglich, nachdem der Roboter die Oberfläche kontaktiert hat, und somit ist die erwähnte stoßförmige Kontaktkraft in praktischen Anwendungen ein notwendiges Übel, welches zwar reduziert (z.B. durch Einfügung eines passiv nachgiebigen Elementes im Antriebsstrang), aber nicht eliminiert werden kann. Eine passive Nachgiebigkeit nach Art einer Feder wirkt jedoch unkontrolliert und kann den gewünschten Prozessablauf stören.

Aus der Publikation US 5,448,146 ist ein robotergestütztes Verfahren zum Aufbringen einer konstanten Kraft mittels eines nichtlinear geregelten pneumatischen Aktors bekannt. Die Publikation EP 1 057 592 A1 betrifft eine Handhabungsvorrichtung für eine Schleifmaschine, wobei die Anpresskraft zwischen Schleifmaschine und Werkstück mit Hilfe der Handhabungsvorrichtung einstellbar ist.

Bekannte kraftgeregelte Systeme können bei sehr schnellen (d.h. hochfrequenten) Störungen, wie z.B. Stöße oder Schläge, häufig nicht schnell genug reagieren, da der geregelte Antriebsstrang eine gewisse Trägheit aufweist, was eine entsprechende Reaktionszeit zur Folge hat. Bei starren Systemen (wie z.B. Standard-Industrieroboter) haben daher kleinste Verschiebungen, wenn sie zu schnell erfolgen, bereits einen hohen Anstieg in der Kraft zur Folge.

Die der Erfindung zugrunde liegende Aufgabe besteht darin, eine aktive Handhabungsvorrichtung (Effektor) für einen Manipulator zur Verfügung zu stellen, die dazu ausgebildet ist, Oberflächen praktisch stoßfrei zu kontaktieren und anschließend die Kontaktkraft ruckfrei zu regeln.

Diese Aufgabe wird durch die Vorrichtung gemäß Anspruch 1 gelöst. Unterschiedliche, beispielhafte Ausgestaltungen und Verwendungen der Vorrichtung sind Gegenstand der abhängigen Ansprüche.

Es wird eine Handhabungsvorrichtung für automatisierte Kontaktaufgaben beschrieben. Gemäß einem Beispiel der Erfindung weist die Vorrichtung folgende Komponenten auf: eine mechanische Schnittstelle zur lösbaren oder festen Verbindung der Handhabungsvorrichtung mit einem Manipulator; eine relativ zu der Schnittstelle bewegbare Halterung zur Aufnahme eines Werkzeuges; mindestens ein getriebeloses, insbesondere haftreibungsfreies Stellelement zur Positionierung der Halterung relativ zur Schnittstelle zum Manipulator; eine Sensoreinrichtung zur direkten oder indirekten Bestimmung der auf das mindestens eine Stellelement wirkenden Kraft; und eine Regeleinrichtung, die dazu ausgebildet ist,
- die Halterung mit einer einstellbaren Minimalkraft (F₀) an einen Anschlag zu drücken solange kein Kontakt zwischen der Handhabungsvorrichtung und einer Oberfläche erfolgt, und
- bei Kontakt zwischen der Handhabungsvorrichtung und der Oberfläche die Kontaktkraft nach Maßgabe eines vorgebbaren Kraftverlaufs zu regeln, wobei nach Kontakterkennung die Kontaktkraft von der Minimalkraft (F₀) auf eine vorgebbare Sollkraft (F_{SOLL}) erhöht wird.

Eine Voraussetzung für die Haftreibungs- und Ruckfreiheit des Stellelemente ist die Verwendung getriebeloser Aktoren. Derartige Aktoren sind z.B. kolbenlose, pneumatische Aktoren (Balgzylinder und Luftmuskel), Pneumatikzylinder mit haftreibungsfrei gelagertem Kolben (z.B. Glaszylinder mit Graphitkoben) und getriebelose, elektrische Lineareinheiten mit haftreibungsfrei gelagertem (z.B. luft- oder magnetgelagertem) Anker. Mit derartigen Aktoren können im passiven (d.h. ungeregelten) Fall sehr flache Kraft-Weg-Kennlinien der Handhabungsvorrichtung erzielt werden.

Die Erfindung wird im Folgenden anhand der in den folgenden Abbildungen dargestellten Ausführungsbeispiele näher erläutert.
- Figur 1: ist eine Darstellung einer robotergestützten automatisierten Schleifeinrichtung mit einem Manipulator, einer Schleifmaschine und einem zwischen Manipulator und Schleifmaschine angeordneten Handhabungsvorrichtung für die Schleifmaschine;
- Figur 2: illustriert anhand einer schematischen Skizze ein Beispiel einer erfindungsgemäßen Handhabungsvorrichtung mit einem Freiheitsgrad, wobei als Aktor ein gegen eine Federkraft arbeitender Balgzylinder vorgesehen ist;
- Figur 3: zeigt eine detailliere Schnittdarstellung durch eine gemäß dem Beispiel aus Figur 2 aufgebaute Handhabungsvorrichtung;
- Figur 4: illustriert anhand eine schematisches Skizze ein weiteres Beispiel einer erfindungsgemäßen Handhabungsvorrichtung mit einem Freiheitsgrad, wobei als Aktor ein gegen eine Federkraft arbeitender Luftmuskel vorgesehen ist;
- Figur 5: illustriert anhand einer schematischen Skizze ein weiteres Beispiel einer erfindungsgemäßen Handhabungsvorrichtung mit drei Freiheitsgraden, wobei als Aktoren drei gegen eine Federkraft arbeitende Balgzylinder vorgesehen sind;
- Figur 6: illustriert den geregelten Kraftverlauf beim Herstellen von Kontakt zwischen Werkzeug und Werkstück sowie bei Kontaktverlust;
- Figur 7: illustriert die Kraft-Weg-Kennlinien von Federn und Balgzylindern sowie eine angepasste Federkennlinie;
- Figur 8: zeigt einen Hebelmechanismus zum Anpassen der Kraft-Weg-Kennlinie einer Feder; und
- Figur 9: illustriert (a) den durch den Mechanismus aus Fig. 8 festgelegten Zusammenhang zwischen Federlänge und Plattenabstand sowie (b) die angepasste Kraft-Weg-Kennlinie des Mechanismus aus Figur 8.

In den Figuren bezeichnen gleiche Bezugszeichen gleiche oder ähnliche Komponenten mit gleicher bzw. ähnlicher Bedeutung.

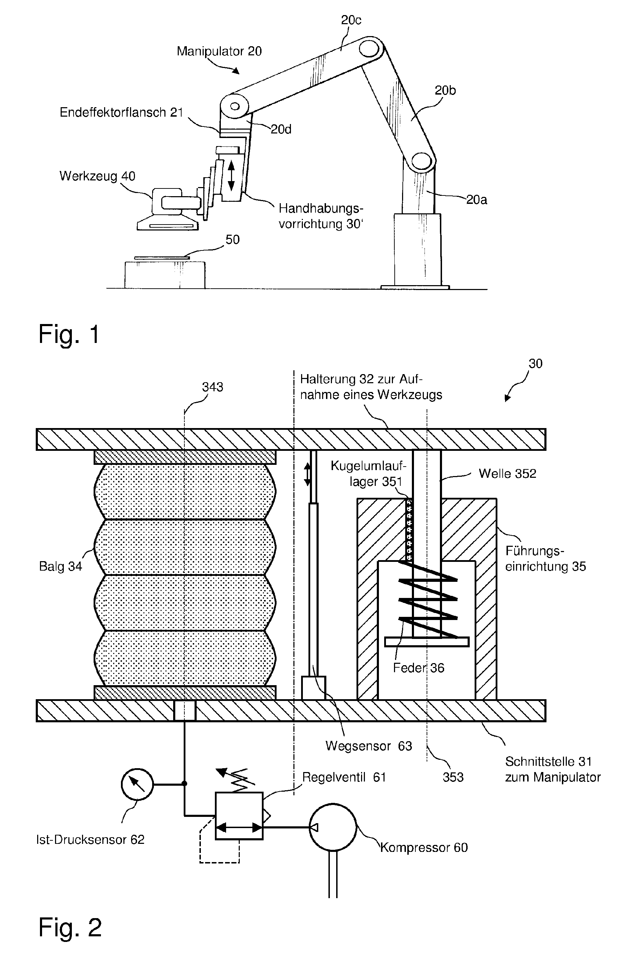

Figur 1 zeigt als ein Beispiel der Erfindung eine Darstellung einer robotergestützten automatisierten Schleifeinrichtung mit einem Industrieroboter als Manipulator 20, einer Schleifmaschine 40 als Werkzeug und eine zwischen einem Endeffektorflansch 21 des Manipulators 20 und dem Werkzeug 40 angeordnete Handhabungsvorrichtung 30', die im Wesentlichen zur Feinsteuerung oder zur präzisen Regelung der Bewegung des Werkszeugs 40 relativ zu einem zu bearbeitenden Werkstück 50 verwendet wird sowie zur Regelung der vom Werkzeug 40 auf das Werkstück 50 ausgeübten Kraft. Der Aufbau des Manipulators 20 ist im Folgenden von untergeordneter Bedeutung. Im vorliegenden Beispiel wird ein Standard-Industrieroboter mit vier Arm-Segmenten 20a, 20b, 20c und 20d verwendet. Die Aufgabe des Manipulators besteht im Wesentlichen in der Positionierung des Werkzeuges 40 in einer Arbeitsposition an bzw. über dem zu bearbeitenden Werkstück 50. Die genaue Positionsregelung und insbesondere eine präzise Kraftregelung wird mit Hilfe der Handhabungsvorrichtung 30' durchgeführt. Diese ist im vorliegenden Fall dazu ausgebildet das Werkzeug 40 (Schleifmaschine) auf das Werkstück 50 hin zu bewegen und bei Kontakt eine Kontaktkraft auf das Werkstück 50 auszuüben. So kann z.B. eine Schleifscheibe der Schleifmaschine mit einer bestimmten Kraft auf das Werkstück 50 gepresst werden, um z.B. eine bestimmte Schleifwirkung zu erzielen. Durch die Kraftregelung kann die Kraft z.B. auch dann konstant gehalten werden, wenn die Schleifscheibe zum Teil verschlissen ist. Zur Kraftregelung ist es notwendig, eine Messgröße für die Kontaktkraft zu ermitteln, was z.B. mit Hilfe einer Kraftmessdose oder über den Motorstrom der Schleifmaschine verwirklicht werden kann. Das in Figur 1 gezeigte Beispiel einer automatischen Schleifeinrichtung ist z.B. in der Publikation US 5,299,389 näher erläutert.

Eine präzise Positionierung des Werkzeugs 40 sowie eine Kraftregelung mit dem Manipulator allein wäre zwar prinzipiell möglich, jedoch stellen diese Aufgaben sehr hohe Anforderungen an den Manipulator. Eine präzise Positionierung sowie eine exakte und schnelle Kraftregelung, wie sie z.B. für viele Kontaktaufgaben notwendig ist, ist nur mit sehr teuren Manipulatoren möglich. Aus diesem Grund befindet sich zwischen Endeffektorflansch des Manipulators, und dem eigentlichen Werkzeug (z.B. Schleif- oder Poliermaschine, Greifer, etc ...) eine Handhabungsvorrichtung, die die oben erwähnte Positions- und Kraftregelungsaufgabe übernimmt. Der Genauigkeitsanforderungen an den Manipulator können dann relativ gering ausfallen. Derartige Handhabungsvorrichtungen werden auch als "aktive Flansche" bezeichnet.

Generell besteht bei robotergestützten bzw. automatisierten Systemen, bei denen der Roboter einen Gegenstand berührt das Problem, den Kontaktzeitpunkt zu erkennen und die Kontaktkraft zu regeln. Eine Kontaktkraftregelung ist erst möglich, nachdem der Roboter die Oberfläche kontaktiert hat. Aus diesem Grund tritt bei allen bekannten, kraftgeregelten Systemen zunächst beim Kontakt zwischen dem am Roboter gelagerten Werkzeug und der zu kontaktierenden Oberfläche eine stoßförmige Kontaktkraft auf. Bei dieser Kollision wirkt nicht nur die Masse (d.h. die Trägheit und damit die kinetische Energie) des Werkzeugs und der Handhabungsvorrichtung, sondern auch die Masse bzw. die kinetische Energie des gesamten Manipulators samt dessen Antriebe. Diese Masse bestimmt im Wesentlichen die (zu vermeidende) Aufprallenergie.

Die resultierende stoßförmige Kontaktkraft mag in vielen Fällen unproblematisch sein, ist jedoch in Anwendungen, bei denen es auf Präzision ankommt oder sehr empfindliche Werkstücke be- oder verarbeitet werden müssen, äußerst störend und unerwünscht. Das heißt, es kommt zu einem Überschwingen der Ist-Kraft im Vergleich zum Soll-Kraftverlauf. Auch während der Bearbeitung einer Oberfläche (oder während des Handhabens eines Gegenstandes) kommt es vor, dass die Position des Werkzeugs nachjustiert werden muss, um die Soll-Kontaktkraft aufrechtzuerhalten. In diesem Fall sind es vor allem Haftreibungseffekte (der sogenannte "Stick-Slip-Effekt") welche zu transienten Überschwingen im Kontaktkraftverlauf führen können. Des Weiteren kann bei getriebebehafteten Antrieben das Ineinandergreifen der Zähne der Getrieberäder unerwünschte ruckartige Stöße oder Schwingungen verursachen. Beim Handhaben oder Bearbeiten von Gegenständen können beide Effekte zu Qualitätsproblemen führen.

Das oben erläuterte Überschwingen wird in der Robotik üblicherweise dadurch reduziert, dass in den Antriebsstrang passive elastische Elemente eingefügt werden. Diese wirken jedoch unkontrolliert und sind damit für präzise Handhabungs- und Kontaktaufgaben nicht verwendbar, da ihr mechanisch definiertes Verhalten (Kraft-Weg-Kennlinie) fest vorgegeben und nicht automatisiert steuerbar ist.

Figur 2 zeigt ein Beispiel einer Handhabungsvorrichtung (aktiver Flansch) gemäß der vorliegenden Erfindung. Ein erster Flanschteil der Vorrichtung bildet eine Schnittstelle 31 zu einem Manipulator (z.B. zum Endeffektorflansch 21 des Manipulators 20 aus Fig. 1). Ein zweiter Flanschteil 32 bildet eine Halterung 32 für ein Werkzeug (wie z.B. eine Schleifmaschine oder ein Greifer). Zwischen den beiden Flanschteilen ist ein haftreibungsfreier Linearaktor angeordnet, der im vorliegenden Beispiel als pneumatischer Balgzylinder 34 realisiert ist. Haftreibungsfreie Aktoren sind z.B. Balgzylinder und Luftmuskel (engl.: pneumatic arificial muscles, PAMs). Alternativ kommen auch Pneumatikzylinder mit haftreibungsfrei gelagerten Kolben in Frage, die üblicherweise aus Glas bestehen und mit einem Graphitkolben arbeiten. Eine weitere Alternative stellen elektrische Direktantriebe, insbesondere haftreibungsfrei gelagerte (z.B. kugel-, magnet- oder luftgelagerte), getriebelose Linearantriebe dar. Derartige Antriebe sind auch inhärent elastisch, entweder aufgrund der Kompressibilität der Luft (bei pneumatischen Aktoren) oder aufgrund der magnetischen Rückstellkraft (bei elektrischen Direktantrieben).

Die Vorrichtung umfasst weiter eine Führungseinrichtung 35, die alle Bewegungsfreiheitsgrade sperrt, mit Ausnahme des Freiheitsgrades der Bewegung des haftreibungsfreien Linearaktors 34. Auch die Führungseinrichtung 35 darf keine nennenswerte Haftreibung zwischen ihr und der in ihr geführten Welle 352 zulassen. Diese Haftreibungsfreiheit kann z.B. durch die Verwendung von Wälzlagern wie z.B. Linearkugellager, insbesondere Kugelumlauflager, gewährleistet werden. In dem in Figur 2 dargestellten Beispiel ist eine verdrehgesicherte Wellenführung 35, 352 mit Kugelumlauflager 351 vorgesehen. Damit hat die Handhabungsvorrichtung genau einen Freiheitsgrad, nämlich eine translatorische Bewegung in Richtung der Längsachse 353 der Wellenführung 35, die natürlich parallel zur Längsachse 343 des Linearaktors (Balgzylinder 34) liegt.

Ein Kompressor 60 erzeugt den notwendigen Überdruck im Pneumatiksystem, um den pneumatischen Linearaktor 34 anzutreiben. Dabei kann der in Figur 2 dargestellte Balgzylinder 34 nur eine Druckkraft bei Ausdehnung erzeugen. Der oben erwähnte Luftmuskel hingegen erzeugt nur eine Zugkraft bei Kontraktion. Aus diesem Grund muss auf den Linearaktor eine Rückstellkraft wirken, die z.B. von einer (Zug- oder Druck-) Feder bereitgestellt wird. In dem Beispiel aus Figur 2 wird die Welle 352 der Wellenführung durch die Druckfeder 36 zurückgehalten, sodass auf den oberen Flanschteil (Halterung 32) eine Vorspannkraft in Richtung des unteren Flanschteils (Schnittstelle 31 zum Manipulator) wirkt. Der Linearaktor 34 bewegt sich aktiv gegen diese Vorspannkraft. Der Überdruck im Linearaktor 34 wird mit Hilfe des Kompressors 60 erzeugt, ist mit Hilfe eines elektronisch angesteuerten Regelventils 61 nach Maßgabe eines Sollwertes (Soll-Druck) einstellbar. Der tatsächliche Druck im Linearaktor 34 (Ist-Druck) wird mit einem Drucksensor 62 gemessen. Des Weiteren ist ein Linearpotentiometer als Wegsensor 63 vorgesehen, welches einen Messwert für die aktuelle Auslenkung des Linearaktors 34 und damit die Relativposition der Halterung 32 liefert (relativ zur Schnittstelle 31 zum Manipulator bzw. relativ zum Endeffektorflansch des Manipulators).

Die druckabhängige Kraft-Weg-Kennlinie des pneumatischen Linearaktors ist üblicherweise bekannt, sodass die vom Linearaktor 34 auf die Flanschteile 31 und 32 zur Verfügung gestellte Aktorkraft einer indirekten Messung zugänglich ist. D.h. aus dem gemessenen Druck im Aktor und der gemessenen Auslenkung (Hub) des Aktors kann ohne weiteres die Aktorkraft berechnet werden. Dabei ist die Kraft-Weg-Kennlinie von pneumatischen Linearaktoren üblicherweise mit einer Hysterese behaftet, sodass in die Kraftberechnung auch die Richtung der Bewegung einfließt. Bei einem elektrischen Direktantrieb könnte die Aktorkraft z.B. mit Hilfe der Stromaufnahme in ähnlicher Weise mit Hilfe einer Kennlinie ermittelt werden.

Die rückstellende Federkraft kann ebenfalls aus der Kraft-Weg-Kennlinie der Feder und der gemessenen Auslenkung berechnet werden. Kontaktiert ein an der Halterung 32 der Handhabungsvorrichtung befestigtes Werkzeug ein Werkstück, dann ist die Differenz aus Aktorkraft und Rückstellkraft, die auf auf das Werkzeug ausgeübte Nettokraft, welche auf herkömmliche Weise geregelt werden kann. Um daraus die Kraft, die tatsächlich auf die Oberfläche wirkt, zu ermitteln, muss zusätzlich das Gewicht des Werkzeugs 40 (vgl. Fig. 1) und dessen räumliche Lage relativ zur Oberfläche des Werkstücks berücksichtigt werden.

Ohne Kontakt ist allein mit dem Messwert für die Auslenkung des Aktors 34 eine Positionsregelung möglich. Des Weiteren kann die Nachgiebigkeit (bzw. Steifigkeit) der Handhabungsvorrichtung 30 geregelt werden (Impedanzregelung), d.h. es wird die Steifigkeit der Anordnung aus Linearaktor und Rückstellfeder nach Maßgabe eines Sollwertes geregelt.

Aufgrund der einem pneumatischen Aktor inhärenten Elastizität und der Haftreibungsfreiheit der Anordnung wird das eingangs erwähnte Überschwingen der Kontaktkraft auf ein Minimum reduziert. Durch dieses elastische Verhalten wird die Masse und Trägheit der bewegten Elemente des Manipulators (Roboterarme und -antriebe) in Wirkrichtung der Elastitizität von dem Werkzeug und folglich vom Werkstück entkoppelt. Damit ist nur die viel kleinere Masse des Werkzeugs für die kinetische Energie maßgeblich. Das verringert die weiter oben bereits erwähnte Aufprallenergie beim Konzakt zwischen Werkstück und Werkzeug.

Des Weiteren wird durch die Haftreibungsfreiheit und durch den getriebelosen Antrieb im Betrieb bei aktiver Kraftregelung ein Überschwingen der Kontaktkraft praktisch vollständig eliminiert. Es wird also eine ruckfreie Kraftregelung ermöglicht wohingegen bei herkömmlichen Handhabungsvorrichtungen aufgrund von Haftreibungseffekten immer unerwünschte Variationen in der Kontaktkraft auftreten, die durch eine Regelung nicht ohne Weiteres kompensiert werden können.

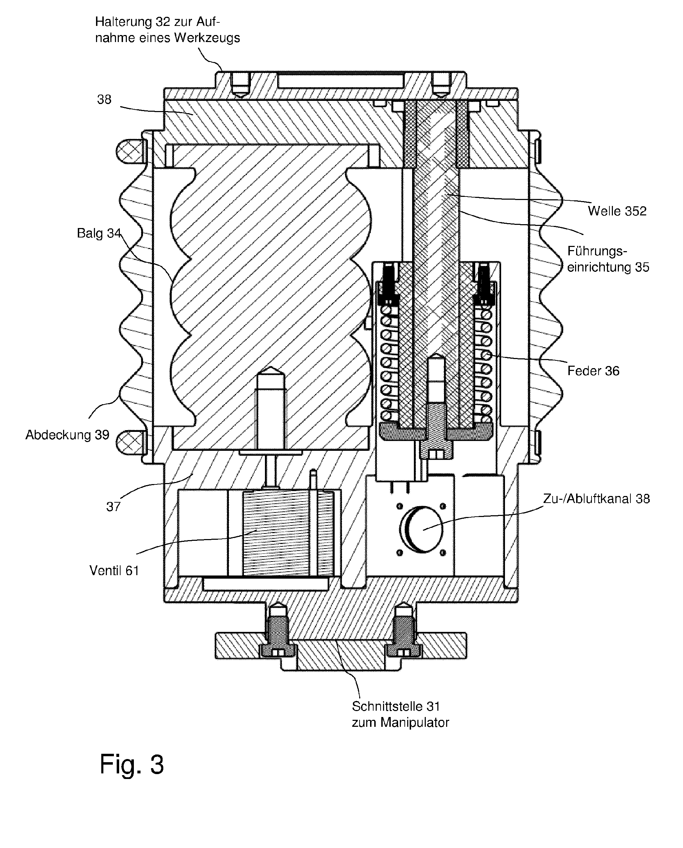

Die Figur 3 zeigt eine detailliere Schnittdarstellung durch die Handhabungsvorrichtung, die gemäß dem in Figur 2 dargestellten Prinzip aufgebaut ist. Der dargestellte aktive Flansch umfasst einen ersten Flanschteil 31 als Schnittstelle zum Manipulator, dessen Endeffektorflansch 21 z.B. in Fig. 1 dargestellt ist, sowie einen zweiten Flanschteil 32 als Halterung bzw. Aufnahme für ein Werkzeug. Die Geometrie beider Flanschteile ist in der Robotik genormt. Mit dem ersten Flanschteil 31 ist ein Gehäuseteil 37 starr verbunden, in dem sowohl das Regelventil 61 als auch die haftreibungsfreie Wellenführung mit Rückstellfeder nach demselben Prinzip angeordnet sind, wie in Figur 2 gezeigt. Zum Schutz gegen Staub und sonstigen Verunreinigungen ist ein Faltenbalg als Abdeckung 39 zwischen den Flanschteilen 31 und 32 vorgesehen. Diese Abdeckung kann auch für den Einsatz unter Wasser, in rauer Umgebung oder in Reinräumen flüssigkeits- und/oder staubdicht ausgebildet sein. Als haftreibungsfreier, getriebeloser Linearaktor dient der Balgzylinder 34. Der Linearaktor ist zwischen dem ersten Gehäuseteil 37 und einem zweiten, mit der Halterung 32 starr verbundenen Gehäuseteil 38 angeordnet.

Der in Figur 2 dargestellte Wegsensor 63 ist in dem vorliegenden Beispiel durch die Führungseinrichtung 35 verdeckt und nicht zu sehen. Der Drucksensor und der Kompressor sind in der Darstellung aus Figur 3 der Übersichtlichkeit halber nicht enthalten. Anschlüsse für den Zu- und Abluftkanal 38 können z.B. im ersten Gehäuseteil 37 angeordnet sein. Der Anschluss zum Zuluftkanal ist z.B. über einen Schlauch mit dem Kompressor 60 verbunden. Der Anschluss für den Abluftkanal ist z.B. mit einem Schalldämpfer abgedeckt. Für Unterwasseranwendungen kann gemäß einem Beispiel der Erfindung auch der Abluftkanal mit einem Schlauch verbunden sein, der die Abluft bis über die Wasseroberfläche leitet, um ein Eindringen von Wasser in das Pneumatiksystem zu verhindern. Durch den als Schlauch ausgebildeten Abluftkanal wird bei sensiblen Prozessen auch ein Ausströmen von Abluft verhindert.

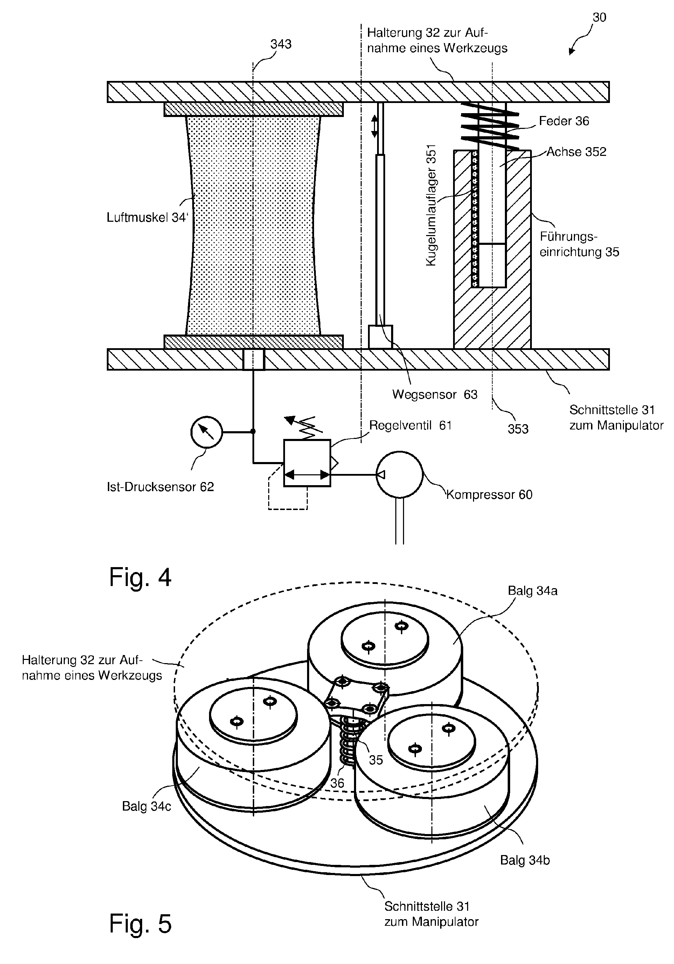

Figur 4 zeigt ein weiteres Beispiel einer erfindungsgemäßen Handhabungsvorrichtung, bei der statt einem Balgzylinder ein Luftmuskel 34' zum Einsatz kommt. Die Feder 36 ist bei diesem Beispiel so angeordnet, dass die beiden Flanschteile 31, 32 (Halterung und Schnittstelle zum Manipulator) auseinandergedrückt werden, während der Luftmuskel 34' eine der Federkraft entgegengerichtete Zugkraft ausübt. Im übrigen ist die Anordnung aus Figur 4 baugleich wie das in Figur 2 gezeigte Beispiel. Im druckfreien Zustand fährt die Vorrichtung aus Figur 4 jedoch in eine Endposition mit maximaler Auslenkung, wohingegen die Vorrichtung aus Figur 2 in eine Endposition mit minimaler Auslenkung (d.h. Abstand der Flanschteile 31 und 32) fährt, was aus Sicherheitsgründen vorteilhaft sein kann.

Ganz allgemein weist die erfindungsgemäße Vorrichtung unter anderem den Vorteil auf, dass bei Energieverlust das System in eine Ausgangsstellung zurückgezogen wird und dennoch passiv bewegbar bleibt. Auch nach einer Notabschaltung (z.B. wegen einer Überschreitung einer zulässigen Maximalkraft) bleibt die Vorrichtung passiv weich und eventuell eingeklemmte Teile können gelöst werden.

Figur 5 zeigt eine vereinfachte Darstellung eines weiteren Beispiels gemäß der vorliegenden Erfindung. Die in Figur 5 dargestellte Handhabungsvorrichtung (aktiver Flansch) hat im Gegensatz zu den in den Figuren 2 bis 4 gezeigten Beispielen drei Freiheitsgrade, nämlich einen translatorischen Freiheitsgrad (Verschiebung in Richtung der Längsachsen der Balgzylinder 34a, 34, 34c), und zwei rotatorische Freiheitsgrade (Verkippen um zwei normal zu den Längsachsen der Balgzylinder 34a, 34, 34c liegende Drehachsen). Bei drei Freiheitsgraden sind auch drei haftreibungsfreie pneumatische Linearaktoren 34a, 34, 34c notwendig, die im vorliegenden Fall gleichmäßig um eine Mittelachse der Handhabungsvorrichtung angeordnet sind. Der übrige Aufbau der Handhabungsvorrichtung wie z.B. die Ansteuerung der haftreibungsfreien pneumatischen Linearaktoren ist im Prinzip gleich wie bei den Beispielen aus den Figuren 2 bis 4. Die haftreibungsfreie Führungseinrichtung 35 ist im Wesentlichen auch gleich aufgebaut wie bei dem Beispiel aus Figur 4 (wobei im vorliegenden Fall eine Zugfeder 36' zur Erzeugung einer Rückstellkraft für die Balgzylinder verwendet wird), jedoch ist die Führungswelle 352 nicht starr mit dem oberen Flanschteil (der die Halterung 32 bildet) verbunden, sondern beispielsweise über ein Kugel- oder Kardangelenk (nicht dargestellt), um die oben erwähnte Kippbewegung zu ermöglichen. Je nach Anwendung kann das Gelenk verdrehgesichert sein, sodass (wie im vorliegenden Beispiel) nur Kippbewegungen des oberen Flanschteils, jedoch keine Verdrehung möglich ist.

Die Rückstellkraft muss nicht grundsätzlich durch eine Feder erzeugt werden, sondern könnte auch durch einen zweiten haftreibungsfreien pneumatischen Linearaktor bereitgestellt werden. So könnte in dem Beispiel aus Fig. 2 auch ein parallel zu dem Balgzylinder angeordneter Luftmuskel (PAM, vgl. Fig. 4) statt der Feder 36 verwendet werden. Alternativ ist auch die Verwendung eines doppeltwirkenden haftreibungsfreien Pneumatikzylinders möglich.

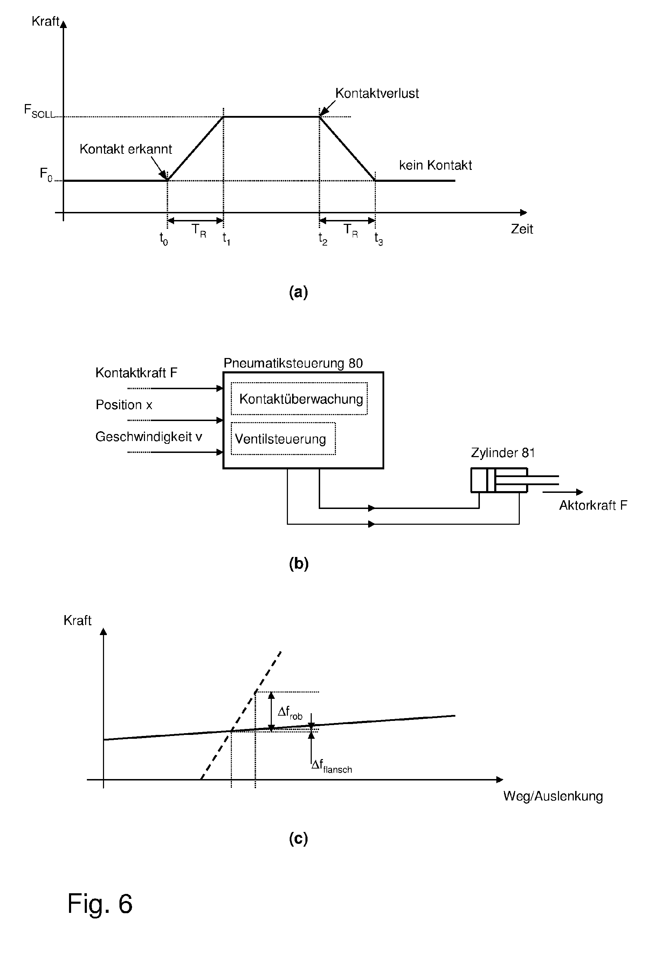

In Figur 6 ist die Regelung der Handhabungsvorrichtung gemäß einem Beispiel der Erfindung noch einmal im Detail erläutert. Fig. 6a zeigt den (geregelten) Kontaktkraftverlauf gemäß einem Beispiel der Erfindung, Figur 6b zeigt schematisch die Steuerung 80 (Regeleinrichtung) des die Handhabungsvorrichtung antreibenden Aktors, im vorliegenden Fall ein doppeltwirkender Pneumatikzylinder 81 mit praktisch haftreibungsfrei im Zylinder gleitenden Kolben. Fig. 6c illustriert den Vorteil der im passiven (ungeregelten) Fall sehr flachen Kraft-Weg-Kennlinie der Handhabungsvorrichtung, so dass die Stoßkräfte beim Kontakt mit dem Werkstück sehr gering sind.

In Fig. 6a ist die von der Handhabungsvorrichtung 30 auf das Werkstück ausgeübte Kraft F(t) im Verlauf der Zeit dargestellt, wobei die Kraft F auf einen minimalen Wert F₀ geregelt wird, wenn kein Kontakt zwischen Handhabungsvorrichtung 30 und Werkstück 50 besteht (vgl. Fig. 1). Die Minimalkraft F₀ kann annähernd Null sein, nur so groß, dass die Handhabungsvorrichtung 30 gerade noch im voll ausgefahrenen (oder, je nach Kraftrichtung, voll eingefahrenen) Zustand bleibt. In diesem Zustand ist eine Kontaktüberwachung aktiv, die bei Herstellung eines Kontakts die Kontaktkraftregelung aktiviert. In dem in Fig. 6a gezeigten Beispiel besteht zu Zeitpunkten t<t0 und t>t3 kein Kontakt zwischen Handhabungsvorrichtung 30 und Werkstück 50 (genau genommen findet der Kontakt indirekt über das an der Handhabungsvorrichtung montierte Werkzeug 40 statt) und die Pneumatiksteuerung 80 hält die Halterung 32 der Handhabungsvorrichtung (vgl. Fig. 2) mit minimaler Kraft F₀ an einem Endanschlag. Im vorliegenden Beispiel wird ein Kontakt zum Zeitpunkt t0 erkannt. Um einen möglichst "weichen" Kontakt zu gewährleisten ist eine sehr geringe Anfangskraft F₀ (idealerweise Null) notwendig, nach Kontakterkennung ist Halterung 32 der Handhabungsvorrichtung 30 nicht mehr am Endanschlag und die Kontaktkraft wird linear erhöht bis zu einer Sollkraft F_{SOLL}, die für die jeweilige Kontaktaufgabe (z.B. Polieren, Schleifen, etc.) gewünscht oder erforderlich ist. Der Kraftanstieg von minimaler Kraft F₀ auf Sollkraft F_{SOLL} erfolgt innerhalb einer definierten Zeitspanne TR. Im vorliegenden Beispiel wird die Sollkraft zum Zeitpunkt t1 erreicht und das Werkstück 50 wird mit Hilfe der Handhabungsvorrichtung bearbeitet (oder anderweitig gehandhabt). Währenddessen ist die Kontaktüberwachung der Steuerung 89 weiter aktiv, um einen eventuellen Kontaktverlust zu erkennen.

Im vorliegenden Beispiel tritt ein derartiger Kontaktverlust zum Zeitpunkt t2 auf. Als Reaktion darauf wird die Halterung 32 der Handhabungsvorrichtung 30 wieder an den Endanschlag fahren und die Steuerung reduziert die Kraft innerhalb eines Zeitintervalls T_{R} von der Sollkraft F_{SOLL} auf die oben erwähnte Minimalkraft F₀, um einem erneuten Kontakt wieder möglichst "sanft" zu gestalten. Im vorliegenden Fall ist der rampenförmige Anstieg nach einem Kontakt und der rampenförmige Abfall der Kraft nach Kontaktverlust gleich lang (in beiden Fällen T_{R}). Je nach Anwendung kann der Kraftabfall bei Kontaktverlust auch schneller erfolgen (z.B. schnellstmögliche Zurücknahme der Kraft durch drucklos Schalten des Pneumatikzylinders).

Fig. 6c illustriert den erwähnten sanften Kontakt zwischen der Handhabungsvorrichtung und dem Werkstück anhand einer Kraft-Weg-Kennlinie. Die passive (d.h. ungeregelte) Kraft-Weg-Kennlinie der Handhabungsvorrichtung kann durch eine geeignete mechanische Konstruktion der Handhabungsvorrichtung wie oben erwähnt, sehr flach eingestellt (durchgezogene Kennlinie) werden. Erzielt werden können Werte von z.B. nur drei Newton pro Millimeter Verschiebung. Im Vergleich dazu sind bekannte kraftgeregelte Systeme verhältnismäßig steif und können bei sehr schnellen (d.h. hochfrequenten) Störungen, wie z.B. Stöße oder Schläge, oft nicht schnell genug reagieren, da der geregelte Antriebsstrang eine gewisse Trägheit aufweist, was eine entsprechende Reaktionszeit zur Folge hat. Bei starren Systemen (wie z.B. Standard-Industrieroboter) haben daher kleinste Verschiebungen Δs, wenn sie zu schnell erfolgen, bereits einen hohen Anstieg Δf_{rob} in der Kraft zur Folge, wohingegen die erfindungsgemäße Handhabungsvorrichtung aufgrund ihrer flachen Kennlinie eine vernachlässigbar kleine Kraftänderung Δf_{flansch} bewirkt und die Kraftregelung erst nach der Kontakterkennung sanft einsetzt.

Im Folgenden wird noch auf unterschiedliche Möglichkeiten zur Kontakterkennung und zur Erkennung eines Kontaktverlustes eingegangen. Die oben genannte Minimalkraft F₀ und die Sollkraft F_{SOLL} haben immer das gleiche Vorzeichen und der Halterung 32 fährt bei fehlendem Kontakt immer an den jeweiligen Endanschlag. Diese Endposition kann z.B. über den Wegsensor 63 (siehe Fig. 2) erkannt werden. Wenn sich die Halterung 32 der Handhabungsvorrichtung 30 in einem Endanschlag befindet kann jedenfalls davon ausgegangen werden, dass kein Kontakt zwischen Handhabungsvorrichtung 30 und Werkstück 40 besteht.

Ausgehend von diesem Zustand (Halterung 32 an einem Endanschlag) wird ein Kontakt detektiert, sobald eine der Sollkraft F_{SOLL} entgegengesetzte Bewegung (z.B. mit Hilfe des Wegsensors 63 detektierte Positionsänderung) der Halterung 32 relativ zur Manipulatorschnittstelle 31 auftritt. Da zu diesem Zeitpunkt die Kraft auf einen minimalen Wert F₀ geregelt ist und da ein pneumatischer Aktor grundsätzlich eine natürliche Nachgiebigkeit aufweist, ist der Kontakt sehr sanft und es kommt zu keinen Stößen zwischen Handhabungsvorrichtung 30 und Werkstück 50.

Ein Kontaktverlust wird z.B. auch dann erkannt, wenn die Geschwindigkeitsänderung der Halterung 32 der Handhabungsvorrichtung 30 einen vorgebbaren Beschleunigungswert überschreitet. Die Geschwindigkeit der Halterung 32 bezogen auf die Manipulatorschnittstelle 31 zum Zeitpunkt des Kontaktverlustes wird gespeichert. Wird diese Geschwindigkeit wieder unterschritten (ohne dass ein Endanschlag angefahren wird), wird wiederum ein Kontakt erkannt. Die Geschwindigkeitsänderung kann entweder mit Hilfe des Wegsensors 62 oder unter Verwendung eines Beschleunigungssensors gemessen werden

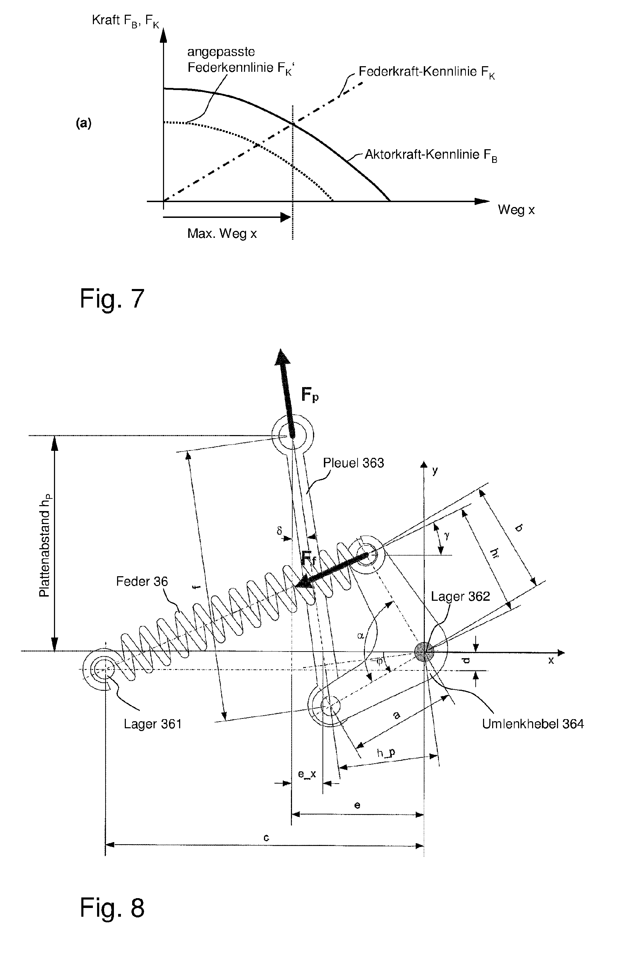

Ein in manchen praktischen Anwendungen auftretendes Problem resultiert aus den ungleichen Kraft-Weg-Kennlinien von Balgzylinder bzw. Luftmuskel und Feder (vgl. Kennliniendiagram in Figur 7). Während Federn im allgemeinen eine mit zunehmender Auslenkung (aus dem entspannten Zustand) linear ansteigende Rückstellkraft aufweisen, haben Balgzylinder (sowie Luftmuskeln) bei gegebenem Innendruck eine fallende Kennlinie mit signifikanter Nichtlinearität. Im Folgenden wird das Beispiel aus Fig. 2 bzw. 3 betrachtet. Die auf eine zu kontaktierende Oberfläche wirkende Kontaktkraft ist im eingeschwungenen Zustand gleich der Differenz aus der Kraft FB des Balgzylinders 34 und der Rückstellkraft FK der Feder 36. Bei einer externen Kontaktkraft von Null ist der Stellweg (die Auslenkung) der Handhabungsvorrichtung jedoch auf den Bereich der Kraft-Weg-Kennlinien beschränkt, der links vom Schnittpunkt zwischen Federkennlinie und Aktorkraft-Kennlinie liegt. Bei einer Kontaktkraft größer Null ist der maximale Stellweg entsprechend kleiner. Um den theoretisch möglichen maximalen Hub des Linearaktors tatsächlich ausnutzen zu können, wäre es wünschenswert, dass die Federkennlinie ebenfalls eine fallende Kennlinie ausweist (siehe angepasste Kennlinie FK'). Im Idealfall hätte die Federkennlinie die gleiche Form wie die Aktorkraft-Kennline. Der - in diesem Fall über Druckänderungen einstellbare - Offset zwischen den Kennlinien entspricht dann der Kontaktkraft, die bei derart angepassten Kennlinien unabhängig von der Auslenkung des Aktors erzeugbar wäre.

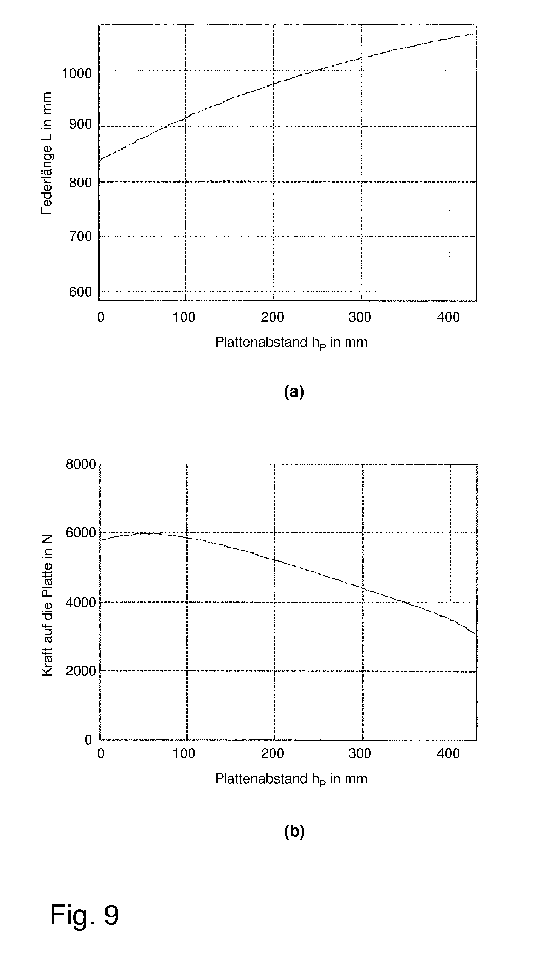

Figur 8 zeigt eine Möglichkeit wie mit Hilfe einer einfachen kinematischen Anordnung die Federkraft-Kennlinie an den Kennlinie des Aktors - zumindest näherungsweise - angepasst werden kann. Bei dem in Figur 8 dargestellten Mechanismus sind die Lager 361 und 362 mit einem Flanschteil (z.B. der Schnittstelle 31 zum Manipulator) starr verbunden und das obere Ende des Pleuels 363 mit dem anderen Flanschteil (z.B. der Halterung 32 für das Werkzeug). An dem Lager 362 ist ein beispielsweise L-förmiger Umlenkhebel 364 schwenkbar gelagert. Zwischen dem Ende eines Schenkels des Umlenkhebels 364 und dem Lager 361 ist die Feder 36 (mit annähernd linearer Kennlinie) gespannt. Zwischen dem Ende des anderen Schenkels des Umlenkhebels 364 und dem zweiten Flanschteil ist der Pleuel 363 angeordnet. Der Abstand zwischen den beiden Flanschteilen 31 und 32 ist in Figur 8 mit hP bezeichnet. Die Kraft-Weg-Kennlinie der zwischen den Platten wirkenden Rückstellkraft in Abhängigkeit des Abstandes hP ist in Figur 9b dargestellt. Figur 9a zeigt den Zusammenhang zwischen der Länge der Feder und dem Abstand hP. Wie in Fig. 8b zu sehen ist, gleicht die Kraft-Weg-Kennlinie des in Fig. 8 gezeigten Systems aus Feder und Umlenkmechanismus der Kraft-Weg-Kennlinie eines Balgzylinders bzw. eines Luftmuskels, wodurch der mögliche Hub eines haftreibungsfreien pneumatischen Linearaktors wesentlich besser ausgenutzt werden kann.

Aufgrund der haftreibungsfreien Ausführung kann eine erfindungsgemäße Handhabungsvorrichtung auch nur als "weiche" (d.h. nachgiebige) Sensoreinheit für die Kontaktkraft betrieben werden. In diesem Fall erfolgt die Positionierung des Werkzeugs teilweise oder ausschließlich über den Manipulator (vgl. Manipulator 20 in Fig. 1). Dabei ist sowohl ein "gemischter Betrieb", als auch ein "sensorgeführter Betrieb" denkbar. Im "gemischten Betrieb" werden kleine und hochfrequente Positionsanpassungen sowie die Kraftregelung von der Handhabungsvorrichtung übernommen, wohingegen die großräumige, übergeordnete Bewegung (grobe Positionierung) vom Manipulator gewährleistet wird. Im "sensorgeführten Betrieb" wirkt die Handhabungsvorrichtung als passive Sensoreinheit und die Regelungsarbeit wird vom Manipulator übernommen. Die Nachgiebigkeit einer solchen Sensoreinheit erlaubt dennoch eine im Wesentlichen stoßfreie Kraftregelung. Auch im reinen Sensorbetrieb ist die Nachgiebigkeit der Vorrichtung, also das Kraft-Weg-Verhalten (auch Impedanz genannt) aktiv einstellbar und an die jeweilige Anwendung anpassbar.

In beiden Fällen (beim "gemischten Betrieb" sowie im "sensorgeführten Betrieb") erfolgt eine Rückkopplung der mit Hilfe der Handhabungsvorrichtung ermittelten Informationen (Messdaten) über die Kontaktkraft und/oder die Lage des Werkzeugs relativ zum Endeffektorflansch des Manipulators an den Antrieb (oder die Antriebseinheiten) des Manipulators. Im Gegensatz dazu arbeitet im "stand alone Betrieb" die Handhabungsvorrichtung unabhängig vom Manipulator und es erfolgt keine Rückkopplung von mit Hilfe der Handhabungsvorrichtung ermittelten Messdaten an die Antriebssteuerung bzw. -regelung des Manipulators. Der Manipulator führt eine vorgegebene Bewegung (z.B. zur Positionierung des Werkzeugs am Werkstück) aus. Die Feinsteuerung und Kraftregelung übernimmt die Handhabungsvorrichtung, wie oben beschrieben, unabhängig vom Manipulator.

Aufgrund der inhärenten Elastizität von haftreibungsfreiem Linearaktor und Rückstellfeder schützt die Handhabungsvorrichtung (sowohl im Betrieb als aktiver Flansch als auch im reinen Messbetrieb) den Manipulator vor Stößen, Schlägen und ähnlichen kurzfristigen Ereignissen, die ein plötzliches Ansteigen der Kontaktkraft zur Folge haben und die eine gewöhnliche Roboterregelung nicht kompensieren kann.

Um die Genauigkeit der Kraftmessung zu erhöhen kann zwischen einem Linearaktor und einem Flanschteil 31 bzw. 32 eine Kraftmessdose angeordnet sein, sodass die Kraft nicht nur rechnerisch (z.B. aus Bewegungsrichtung, Druck und Auslenkung)ermittelt, sondern auch direkt gemessen werden kann.

Ein Beispiel der Erfindung betrifft ein Verfahren zum Handhaben von Gegenständen oder zum Bearbeiten von Oberflächen mit einem Manipulator, einer an diesem angeordneten Handhabungsvorrichtung wie beispielsweise in den Figuren 2 bis 5 gezeigt, sowie einem Werkzeug, welches mit dem Gegenstand bzw. der Oberfläche in Berührung kommt. Das Verfahren umfasst das Positionieren des Werkzeuges durch entsprechendes Auslenken der Handhabungsvorrichtung, so dass die Kontaktkraft einem vorgegebenen Sollwert entspricht, wobei der Sollwert abhängig von der Position des Manipulators sein kann. Das Verfahren umfasst weiter das Handhaben des Gegenstandes (z.B. Positionieren, Stapeln, etc.) bzw. Bearbeiten der Oberfläche (z.B. Schleifen, Polieren, etc.). Während des Vorgangs des Handhabens bzw. des Bearbeitens wird dabei kontinuierlich die Position des Werkzeugs und die mit Hilfe der Handhabungsvorrichtung ermittelte Kontaktkraft überwacht und bei Bedarf auch protokolliert. Damit kann zu jedem Werkstück automatisch ein Bearbeitungsprotokoll angefertigt und das Werkstück entsprechend klassifiziert werden (z.B. als B-Ware, wenn beim Bearbeiten oder Handhaben gewisse Kraft-Toleranzen nicht eingehalten wurden).

Im Folgenden werden exemplarisch einige wichtige Aspekte einer erfindungsgemäßen Handhabungsvorrichtung zusammengefasst:

Ein für automatisierte Kontaktaufgaben geeignete Handhabungsvorrichtung (aktiver Flansch) umfasst als mechanische Schnittstelle einen ersten Flanschteil zur lösbaren oder festen Verbindung der Handhabungsvorrichtung mit einem Manipulator sowie einen relativ zu dem ersten Flanschteil bewegbaren, als Halterung zur Aufnahme eines Werkzeuges ausgebildeten zweiten Flanschteil. Mindestens ein getriebeloses, haftreibungsfreies Stellelement dient zur Positionierung der Halterung relativ zu dem ersten Flanschteil. Des Weiteren ist eine Sensoreinrichtung zur direkten oder indirekten Bestimmung der auf das mindestens eine Stellelement wirkenden Kraft vorgesehen. Schließlich sorgt eine Regeleinrichtung - bei Kontakt zwischen einem an der Halterung gelagerten Werkzeug und einer Oberfläche - für die Regelung der Kontaktkraft nach Maßgabe eines vorgebbaren Kraftverlaufs.

Des Weiteren kann eine haftreibungsfrei gelagerte (z.B. mit Hilfe eines Wälzlagers oder eines Luftlagers) mechanische Führungseinrichtung zwischen den beiden Flanschteilen angeordnet sein, die sämtliche mechanischen Freiheitsgrade sperrt mit Ausnahme jener, die von dem mindestens einen Stellelement einstellbar sind. Im Falle eines einzigen Freiheitsgrades kann z.B. eine verdrehsichere Wellenführung alle freiheitsgrade bis auf den einen translatorischen Freiheitsgrad sperren, der mit der Bewegung des Stellelementes korrespondiert.

Die Handhabungsvorrichtung kann weiter ein Federelement aufweisen, das eine Rückstellkraft zwischen den beiden Flanschteilen erzeugt, die gegen die Kraftwirkung des haftreibungsfreien Stellelementes gerichtete ist. Die von dem Handhabungsvorrichtung auf einen externen Körper (z.B. Werkstück) ausgeübte Nettokraft entspricht demnach der Differenz aus Aktorkraft und Rückstellkraft der Feder.

Jedes getriebelose haftreibungsfreie Stellelement sowie das oben erwähnte Federelement weist eine charakteristische Kraft-Weg-Kennlinie auf. Im Falle einer einfachen Feder ist diese Kennlinie linear ansteigend, im Falle eines pneumatischen Aktors ist diese fallend und druckabhängig. Zusammen bestimmen diese Kennlinien das elastisches Verhalten der Handhabungsvorrichtung (d.h. Nettokraft versus Position der Halterung relativ zum Manipulator). Die Regeleinrichtung kann dazu ausgebildet sein, die Kraft-Weg-Kennlinie des Stellelementes (bzw. der Stellelemente) so einzustellen, dass die Handhabungsvorrichtung ein vorgegebenes elastisches Verhalten aufweist.

Wie bereits erwähnt kann das Stellelement ein kolbenloser pneumatischer Aktor, ein haftreibungsfreier Pneumatikzylinder oder ein elektrischer, getriebeloser Direktantrieb sein. Im Falle des elektrischen Direktantriebs tritt anstelle einer druckabhängigen Kraft-Weg-Kennlinie eine stromabhängige Kraft-Weg-Kennlinie.

Um die Kraft-Weg-Kennlinie des Federelementes an die Kennlinie des Aktors zumindest näherungsweise anzupasen kann die nach außen wirksame Kraft-Weg-Kennlinie der Feder durch eine kinematische Anordnung (d.h. einen Hebelmechanismus) an die Kraft-Weg-Kennlinie des haftreibungsfreien pneumatischen Stellelements verändert werden.

Die Sensoreinrichtung kann für jedes Stellelement einen Positionssensor zur Messung der Länge des jeweiligen Stellelementes aufweisen. Alternativ kann ein Sensor vorgesehen sein, der dazu ausgebildet ist, die Lage der Halterung relativ zu dem ersten Flanschteil (d.h. zum Manipulator) zu bestimmen.

Im Falle pneumatischer Aktoren kann die Sensoreinrichtung dazu ausgebildet sein, aus der gemessenen Länge des mindestens einen Stellelementes und aus dem im Stellelement herrschenden Druck die auf das Stellelement wirkende Kraft sowie die Position der Halterung relativ zu dem ersten Flanschteil zu berechnen.

Für Anwendungen unter Wasser, oder für Anwendungen bei denen Luftströmungen störend sind, kann ein Abluftkanal des pneumatischen Stellelements mit einem Schlauch verbunden sein, der die Abluft von der Handhabungsvorrichtung weg leitet, sodass in der Nähe der Vorrichtung keine Luftströmungen auftreten. Des Weiteren kann die Handhabungsvorrichtung gegen das eindringen von Wasser und/oder Staub abgedichtet sein.

Ein weiteres Beispiel der Erfindung betrifft ein System umfassend einen Manipulator mit zumindest einem Freiheitsgrad, eine an dem Manipulator befestigte Handhabungsvorrichtung wie oben beschrieben, ein an der Handhabungsvorrichtung angeordnetes Werkzeug für Kontaktaufgaben. Des Weiteren ist eine Regeleinheit zur Regelung der von dem Werkzeug auf ein Werkstück ausgeübten Kraft vorgesehen, wobei die Regeleinheit dazu ausgebildet ist, mit Hilfe des Manipulators eine grobe Positionierung des Werkstücks vorzunehmen und mit Hilfe der Handhabungsvorrichtung die Feinpositionierung und die Kraftregelung durchzuführen.

Alternativ wird die Handhabungsvorrichtung rein passiv als Sensoreinheit betrieben und die Kraftregelung erfolgt allein über den Antrieb des Manipulators. In beiden Fällen erfolgt über die einstellbare Elastizität der Handhabungsvorrichtung eine mechanische Entkopplung zwischen dem Werkstück und der trägen Masse des Manipulators.

## Patentansprüche

1. Handhabungsvorrichtung für automatisierte Kontaktaufgaben, die folgende Komponenten aufweist:
eine mechanische Schnittstelle (31) zur lösbaren oder festen Verbindung der Handhabungsvorrichtung mit einem Manipulator;
eine relativ zu der Schnittstelle (31) bewegbare Halterung (32) zur Aufnahme eines Werkzeuges;
mindestens ein getriebeloses, insbesondere haftreibungsfreies Stellelement, beispielsweise ein Pneumatikzylinder oder ein Luftmuskel, zur Positionierung der Halterung relativ zur Schnittstelle zum Manipulator;
**gekennzeichnet durch**
eine Sensoreinrichtung zur direkten oder indirekten Bestimmung der auf das mindestens eine Stellelement wirkenden Kraft, wobei die Sensoreinrichtung einen Wegsensor (63) aufweist zur Messung der Relativposition zwischen Schnittstelle (31) und Halterung (32); und
eine Regeleinrichtung, die dazu ausgebildet ist,
die Halterung mit einer einstellbaren Minimalkraft (F₀) an einen Anschlag zu drücken solange kein Kontakt zwischen der Handhabungsvorrichtung und einer Oberfläche erfolgt,
einen Kontakt zu erkennen, wenn sich die Halterung (32) relativ zur Schnittstelle (31) gegen die Richtung der Minimalkraft (F₀) bewegt; und
bei Kontakt zwischen der Handhabungsvorrichtung und einer Oberfläche die Kontaktkraft nach Maßgabe eines vorgebbaren Kraftverlaufs zu regeln, wobei nach Kontakterkennung die Kontaktkraft von der Minimalkraft (F₀) auf eine vorgebbare Sollkraft (F_{SOLL}) erhöht wird.

2. Handhabungsvorrichtung gemäß Anspruch 1, wobei die Regeleinrichtung weiter dazu ausgebildet ist, einen Kontaktverlust zu erkennen und als Reaktion darauf die vom Aktor bereitgestellte Kraft (F_{SOLL}) auf die Minimalkraft (F₀) zu reduzieren.

3. Handhabungsvorrichtung gemäß Anspruch 1 oder 2,
bei der die Sensoreinrichtung einen Wegsensor (63) aufweist zur Messung der Relativposition zwischen Schnittstelle (31) und Halterung (32) und
bei der die Regeleinrichtung dazu ausgebildet ist, einen fehlenden Kontakt zu erkennen, wenn die Halterung aufgrund der vom Aktor bereitgestellten Kraft an einen Endanschlag bewegt wird.

4. Handhabungsvorrichtung gemäß Anspruch 1, 2 oder 3, bei der die Regeleinrichtung dazu ausgebildet ist, einen Kontaktverlust zu erkennen, wenn die Geschwindigkeitsänderung der Halterung (32) relativ zur Schnittstelle (31) einen vorgegebenen Schwellwert überschreitet.

5. Handhabungsvorrichtung gemäß Anspruch 4, wobei bei der Erkennung des Kontaktverlustes die Geschwindigkeit der Halterung (32) relativ zur Schnittstelle (31) gespeichert wird und ein Kontakt erkannt wird, wenn diese Geschwindigkeit wieder unterschritten wird.

6. Handhabungsvorrichtung gemäß einem der Ansprüche 1 bis 5,
die weiter ein Federelement aufweist, das eine gegen die Kraftwirkung des haftreibungsfreien Stellelementes gerichtete Rückstellkraft auf die Halterung ausübt, oder
die als Stellelement einen doppeltwirkenden Pneumatikzylinder aufweist.

7. Handhabungsvorrichtung gemäß Anspruch 6, wobei das mindestens eine haftreibungsfreie Stellelement sowie das Federelement Kraft-Weg-Kennlinien aufweisen, die zusammen ein elastisches Verhalten der Handhabungsvorrichtung bestimmen, wobei die Regeleinrichtung dazu ausgebildet ist, die Kraft-Weg-Kennlinie des Stellelementes so einzustellen, dass die Handhabungsvorrichtung ein vorgegebenes elastisches Verhalten aufweist.

8. Handhabungsvorrichtung gemäß einem der Ansprüche 1 bis 7,
bei der das Stellelement ein Linearaktor, insbesondere ein kolbenloser pneumatischer Aktor, ein haftreibungsfreier Pneumatikzylinder oder ein elektrischer, getriebeloser Direktantrieb ist,
bei der die Sensoreinrichtung für jedes Stellelement einen Positionssensor aufweist zur Messung der Länge des jeweiligen Stellelementes oder zur Messung der Lage der Halterung relativ zu der Schnittstelle zum Manipulator, und
bei der die Sensoreinrichtung dazu ausgebildet ist, aus der gemessenen Länge des mindestens einen Stellelementes und aus dem im Stellelement herrschenden Druck die auf das Stellelement wirkende Kraft sowie die Position der Halterung relativ zu der Schnittstelle zum Manipulator zu berechnen.

9. Handhabungsvorrichtung gemäß einem der Ansprüche 6 bis 8, bei dem die Kraft-Weg-Kennlinie der Feder durch eine kinematische Anordnung an die Kraft-Weg-Kennlinie des haftreibungsfreien pneumatischen Stellelements angepasst ist.

10. Handhabungsvorrichtung gemäß einem der Ansprüche 1 bis 9, bei dem das Stellelement ein kolbenloser pneumatischer Aktor oder ein haftreibungsfreier Pneumatikzylinder ist, wobei ein Abluftkanal des Stellelements mit einem Schlauch verbunden ist, der die Abluft von der Handhabungsvorrichtung weg führt.

11. Verfahren zum Handhaben von Gegenständen oder zum Bearbeiten von Oberflächen mit einem Manipulator, einer an diesem angeordneten Handhabungsvorrichtung gemäß einem der Ansprüche 1 bis 10 sowie einem Werkzeug, welches mit dem Gegenstand bzw. der Oberfläche in Berührung kommt, wobei
das Verfahren umfasst:
Messen mittels des Wegsensors (63) der Relativposition zwischen Schnittstelle (31) und Halterung (32);
Ansteuern des Stellelements, sodass dieses eine einstellbare minimale Kraft an dem Anschlag bereitstellt und Überwachen, ob ein Kontakt zwischen Werkzeug und Oberfläche erfolgt, wobei ein Kontakt dann erkannt wird, wenn sich die Halterung (32) relativ zur Schnittstelle (31) gegen die Richtung der Minimalkraft (F₀) bewegt,
Positionieren des Werkzeuges durch entsprechendes Ansteuern des Manipulators und/oder durch Auslenken der Handhabungsvorrichtung bis dass ein Kontakt zwischen Werkzeug und Oberfläche detektiert wird,
Erhöhen der vom Stellelement bereitgestellten Kraft, so dass die Kontaktkraft von dem minimalen Wert auf einen vorgegebenen Sollwert innerhalb einer bestimmten Zeit erhöht wird;
Handhaben des Gegenstandes bzw. Bearbeiten der Oberfläche und Überwachen, ob ein Kontaktverlust auftritt; und
Reduzieren der vom Stellelement bereitgestellten Kraft auf die Minimalkraft, wenn ein Kontaktverlust erkannt wird.

12. Verfahren gemäß Anspruch 11, bei dem die Kontaktkraft abhängig von der Auslenkung der Handhabungsvorrichtung entsprechend einer vorgegebenen Kraft-Weg-Kennlinie automatisiert angepasst wird.

13. Verfahren gemäß Anspruch 11 oder 12,
bei dem ein fehlender Kontakt oder ein Kontaktverlust erkannt wird, wenn die Handhabungsvorrichtung an einen Endanschlag fährt.

14. Verfahren gemäß Anspruch 11 oder 12,
bei dem ein Kontaktverlust erkannt wird, wenn die Geschwindigkeitsänderung der Halterung (32) der Handhabungsvorrichtung relativ zu deren Schnittstelle (31) zum Manipulator einen vorgegebenen Schwellwert überschreitet.

15. Verfahren gemäß Anspruch 13, wobei bei der Erkennung des Kontaktverlustes die Geschwindigkeit der Halterung (32) relativ zur Schnittstelle (31) gespeichert wird und ein Kontakt erkannt wird, wenn diese Geschwindigkeit wieder unterschritten wird.

16. System umfassend einen Manipulator mit zumindest einem Freiheitsgrad, eine an dem Manipulator befestigte Handhabungsvorrichtung gemäß einem der Ansprüche 1 bis 10, ein an der Handhabungsvorrichtung angeordnetes Werkzeug für Kontaktaufgaben sowie eine Regeleinheit zur Regelung der von dem Werkzeug auf ein Werkstück ausgeübten Kraft, wobei die Regeleinheit dazu ausgebildet ist, mit Hilfe des Manipulators eine grobe Positionierung des Werkstücks vorzunehmen und mit Hilfe der Handhabungsvorrichtung die Feinpositionierung und die Kraftregelung durchzuführen.

17. System umfassend einen Manipulator mit zumindest einem Freiheitsgrad, eine an dem Manipulator befestigte Handhabungsvorrichtung gemäß einem der Ansprüche 1 bis 10, ein an der Handhabungsvorrichtung angeordnetes Werkzeug für Kontaktaufgaben sowie eine Regeleinheit zur Regelung der von dem Werkzeug auf ein Werkstück ausgeübten Kraft, wobei die Regeleinheit dazu ausgebildet ist, ausschließlich mit Hilfe des Manipulators eine Positionierung des Werkstücks vorzunehmen und mit Hilfe der Handhabungsvorrichtung eine für die Kraftregelung notwendige Kraftmessung durchzuführen, wobei das elastische Verhalten der Handhabungsvorrichtung nach Maßgabe eines Sollwertes einstellbar ist.

## Claims

1. Handling apparatus for automated contact tasks, said handling apparatus having the following components:
a mechanical interface (31) for releasably or fixedly connecting the handling apparatus to a manipulator;
a holder (32), which is movable in relation to the interface (31), for receiving a tool;
at least one gearless, in particular static-frictionless adjusting element, for example a pneumatic cylinder or a pneumatic muscle, for positioning the holder in relation to the interface to the manipulator; **characterized by**
a sensor device for directly or indirectly determining the force acting on the at least one adjusting element, wherein the sensor device has a displacement sensor (63) for measuring the relative position between the interface (31) and the holder (32); and
a regulating device which is realized for the purpose of
pressing the holder at an adjustable minimum force (F₀) against a stop as long as there is no contact between the handling apparatus and a surface,
recognizing contact when the holder (32) is moved in relation to the interface (31) in opposition to the direction of the minimum force (F₀); and
regulating the contact force according to a predeterminable force progression when there is contact between the handling apparatus and a surface, wherein once contact has been recognized, the contact force is increased from the minimum force (F₀) to a predeterminable required force (F_{REQUIRED}).

2. Handling apparatus according to Claim 1, wherein the regulating device is realized additionally for the purpose of recognizing loss of contact and, as a reaction to this, of reducing the force (F_{REQUIRED}) provided by the actuator to the minimum force (F₀).

3. Handling apparatus according to Claim 1 or 2, where the sensor device has a displacement sensor (63) for measuring the relative position between the interface (31) and the holder (32) and
where the regulating device is realized for the purpose of recognizing lack of contact when the holder is moved toward an end stop as a result of the force provided by the actuator.

4. Handling apparatus according to Claim 1,2 or 3, where the regulating device is realized for the purpose of recognizing loss of contact when the change in speed of the holder (32) in relation to the interface (31) exceeds a predetermined threshold value.

5. Handling apparatus according to Claim 4, wherein when loss of contact is recognized, the speed of the holder (32) in relation to the interface (31) is stored and contact is recognized when said speed is fallen below again.

6. Handling apparatus according to one of Claims 1 to 5, said handling device additionally having a spring element which exerts a restoring force, which is directed in opposition to the force action of the static-frictionless adjusting element, onto the holder, or said handling device having a double-acting pneumatic cylinder.

7. Handling apparatus according to Claim 6, wherein the at least one static-frictionless adjusting element as well as the spring element have force-displacement characteristic curves which together determine a resilient performance characteristic of the handling apparatus, wherein the regulating device is realized for the purpose of adjusting the force-displacement characteristic curve such that the handling apparatus has a predetermined resilient performance characteristic.

8. Handling apparatus according to one of Claims 1 to 7, where the adjusting element is a linear actuator, in particular a pistonless pneumatic actuator, a static-frictionless pneumatic cylinder or an electric, gearless direct drive, where the sensor device has a position sensor for every adjusting element for measuring the length of the respective adjusting element or for measuring the position of the holder in relation to the interface to the manipulator, and where the sensor device is realized for the purpose of calculating the force acting on the adjusting element as well as the position of the holder in relation to the interface to the manipulator from the measured length of the at least one adjusting element and from the pressure prevailing in the adjusting element.

9. Handling apparatus according to one of Claims 6 to 8, where the force-displacement characteristic curve of the spring is adapted to the force- displacement characteristic curve of the static-frictionless pneumatic adjusting element by means of a kinematic arrangement.

10. Handling apparatus according to one of Claims 1 to 9, where the adjusting element is a pistonless pneumatic actuator or a static-frictionless pneumatic cylinder, wherein an exhaust air duct of the adjusting element is connected to a hose which conducts the exhaust air away from the handling apparatus.

11. Method for handling objects or for processing surfaces with a manipulator, a handling apparatus according to one of Claims 1 to 10 which is arranged on said manipulator as well as a tool which comes into contact with the object or the surface, wherein the method includes:
measuring by means of the displacement sensor (63), the relative position between the interface (31) and the holder (32);
actuating the adjusting element such that it provides an adjustable minimum force against the stop and monitors whether there is a contact between the tool and the surface,
wherein contact is recognized when the holder (32) is moved in relation to the interface (31) in opposition to the direction of the minimum force (F₀),
positioning the tool by correspondingly actuating the manipulator and/or by deflecting the handling apparatus until contact between the tool and the surface is detected,
increasing the force provided by the adjusting element such that the contact force is increased from the minimum value to a predetermined required value inside a certain time;
handling the object or processing the surface and monitoring whether loss of contact occurs; and
reducing the force provided by the adjusting element to the minimum force when loss of contact is recognized.

12. Method according to Claim 11, where the contact force is adapted in an automated manner corresponding to a predetermined force- displacement characteristic curve in dependence on the deflection of the handling apparatus.

13. Method according to Claim 11 or 12, where lack of contact or loss of contact is recognized when the handling apparatus moves to an end stop.

14. Method according to Claim 11 or 12, where loss of contact is recognized when the change in speed of the holder (32) of the handling apparatus in relation to the interface (31) thereof to the manipulator exceeds a predetermined threshold.

15. Method according to Claim 13, where when loss of contact is recognized, the speed of the holder (32) in relation to the interface (31) is stored and contact is recognized when said speed is fallen below again.

16. System including a manipulator with at least one degree of freedom, a handling apparatus according to one of Claims 1 to 10 which is fastened on the manipulator, a tool for contact tasks which is arranged on the handling apparatus as well as a regulating unit for regulating the force exerted onto a workpiece by the tool, wherein the regulating unit is realized for the purpose of roughly positioning the workpiece by means of the manipulator and of carrying out the precise positioning and the regulating of the force by means of the handling apparatus.

17. System including a manipulator with at least one degree of freedom, a handling apparatus according to one of Claims 1 to 10 which is fastened on the manipulator, a tool for contact tasks which is arranged on the handling apparatus as well as a regulating unit for regulating the force exerted onto a workpiece by the tool, wherein the regulating unit is realized for the purpose of positioning the workpiece exclusively by means of the manipulator and of carrying out force measuring necessary for the regulating of the force by means of the handling apparatus, wherein the elastic performance characteristic of the handling apparatus is adjustable in accordance with a required value.

## Revendications

1. Dispositif de manipulation pour des travaux par contact automatisés qui comprend les composants suivants :
- une interface mécanique (31) pour permettre la liaison amovible ou permanente du dispositif de manipulation avec un manipulateur,
- un organe de fixation (32) mobile par rapport à l'interface (31) destiné à recevoir un outil,
- au moins un élément de réglage à entrainement direct, en particulier exempt de frottement par adhérence par exemple un cylindre pneumatique ou un muscle pneumatique pour permettre de positionner l'organe de fixation relativement à l'interface avec le manipulateur,
**caractérisé en ce qu'**
il comporte :
un dispositif de capteurs pour permettre une détermination directe ou
indirecte de la force agissant sur l'élément de réglage, ce dispositif de capteurs comportant un capteur de course (63) pour permettre de mesurer la position relative entre l'interface (31) et l'organe de fixation (32), et
un dispositif de régulation qui est réalisé pour comprimer l'organe de fixation contre une butée avec une force minimum réglable (F₀) tant qu'il n'y a aucun contact entre le dispositif de manipulation et une surface,
pour reconnaitre un contact lorsque l'organe de fixation (32) se déplace par rapport à l'interface (31) dans une direction opposée la direction de la force minimum (Fo), et
en présence d'un contact entre le dispositif de manipulation et une surface pour régler la force de contact conformément à des variations de force définies, après la reconnaissance d'un contact la force de contact étant augmentée de la force minimum (F₀) jusqu'à une force de consigne (F_{SOLL}) pouvant être prédéfinie.

2. Dispositif de manipulation conforme à la revendication 1, dans lequel le dispositif de régulation est en outre réalisé pour reconnaitre une perte de contact, et en réponse à celle-ci pour réduire la force (F_{SOLL}) fournie par l'actionneur jusqu'à la force minimum (F₀).

3. Dispositif de manipulation conforme à la revendication 1 ou 2, dans lequel le dispositif de capteurs comporte un capteur de course (63) pour permettre de mesurer la position relative entre l'interface (31) et l'organe de fixation (32), et
le dispositif de régulation est réalisé pour permettre de reconnaitre une absence de contact lorsque l'organe de fixation est déplacé suite à la force fournie par l'actionneur contre une butée de fin de course.

4. Dispositif de manipulation conforme à la revendication 1, 2 ou 3, dans lequel le dispositif de régulation est réalisé pour reconnaitre une perte de contact lorsque la variation de vitesse de l'organe de fixation (32) par rapport à l'interface (31) dépasse une valeur de seuil prédéfinie.

5. Dispositif de manipulation conforme à la revendication 4, dans lequel lors de la reconnaissance de la perte de contact, la vitesse de l'organe de fixation (32) par rapport à l'interface (31) est enregistrée et un contact est reconnu lorsque la vitesse devient à nouveau inférieure à celle-ci.

6. Dispositif de manipulation conforme à l'une des revendications 1 à 5, qui comporte en outre un élément élastique qui exerce sur l'organe de fixation une force de rappel dirigée à l'opposé de l'action de la force de l'élément de réglage exempt de frottement par adhérence, ou qui comporte en tant qu'élément de réglage un cylindre pneumatique à double action.

7. Dispositif de manipulation conforme à la revendication 6, dans lequel l'élément de réglage exempt de frottement par adhérence et l'élément élastique comportent des caractéristiques force-course qui déterminent conjointement le comportement élastique du dispositif de manipulation, le dispositif de régulation étant réalisé pour régler la caractéristique force-course de l'élément de réglage de sorte que le dispositif de manipulation présente un comportement élastique prédéfini.

8. Dispositif de manipulation conforme à l'une des revendications 1 à 7, dans lequel l'élément de réglage est un actionneur linéaire, en particulier un actionneur pneumatique sans piston, un cylindre pneumatique exempt de frottement par adhérence ou un entrainement électrique direct sans transmission,
le dispositif de capteurs comporte, pour chaque élément de réglage un capteur de position pour permettre de mesurer la longueur de l'élément de réglage respectif ou de mesurer la position de l'organe de fixation par rapport à l'interface avec le manipulateur, et
le dispositif de capteurs est réalisé pour permettre de calculer à partir de la longueur mesurée de l'élément de réglage et de la pression régnant dans l'élément de réglage la force agissant sur l'élément de réglage ainsi que la position de l'organe de fixation par rapport à l'interface avec le manipulateur.

9. Dispositif de manipulation conforme à l'une des revendications 6 à 8, dans lequel la caractéristique force-course du ressort est adaptée par un dispositif cinématique à la caractéristique force-course de l'élément de réglage pneumatique exempt de frottement par adhérence.

10. Dispositif de manipulation conforme à l'une des revendications 1 à 9, dans lequel l'élément de réglage est un actionneur pneumatique sans piston ou un cylindre pneumatique exempt de frottement par adhérence, un canal d'évacuation d'air de l'élément de réglage étant relié à un tuyau qui évacue l'air extrait du dispositif de manipulation.

11. Procédé permettant la manipulation d'objets ou le traitement de surfaces avec un manipulateur, un dispositif de manipulation conforme à l'une des revendications 1 à 10, monté sur celui-ci et un outil venant en contact avec l'objet ou la surface, ce procédé comprenant les étapes consistant à :
mesurer au moyen du capteur de course (63) la position relative entre l'interface (31) et l'organe de fixation (32),
commander l'élément de réglage de sorte que celui-ci exerce une force minimum réglable sur la butée, et
surveiller s'il y a un contact entre l'outil et la surface, un contact étant reconnu lorsque l'élément de fixation (32) se déplace par rapport à l'interface (31) dans la direction opposée à la direction de la force minimum (Fo),
positionner l'outil par commande correspondante du manipulateur et/ou par déviation du dispositif de manipulation jusqu'à ce que soit détecté un contact entre l'outil et la surface,
augmenter la force exercée par l'élément de réglage de sorte que la force de contact soit augmentée de la valeur minimum jusqu'à une valeur de consigne prédéfinie pendant un intervalle de temps donné,
manipuler l'objet ou usiner la surface et surveiller s'il y a un contact, et réduire la force exercée par l'élément de réglage à la force minimum lorsqu'une perte de contact a été reconnue.

12. Procédé conforme à la revendication 11, selon lequel la force de contact est adaptée de manière automatisée en fonction de la déviation du dispositif de manipulation selon une caractéristique force-course prédéfinie.

13. Procédé conforme à la revendication 11 ou 12, selon lequel une absence de contact ou une perte de contact est reconnue lorsque le dispositif de manipulation parvient à une butée de fin de course.

14. Procédé conforme à la revendication 11 ou 12, selon lequel une perte de contact est reconnue lorsque la modification de la vitesse de l'organe de fixation (32) du dispositif de manipulation par rapport à son interface (31) avec le manipulateur dépasse une valeur prédéfinie.

15. Procédé conforme à la revendication 13, selon lequel lors de la reconnaissance d'une perte de contact, la vitesse de l'organe de fixation (32) par rapport à l'interface (31) est enregistrée et un contact est reconnu lorsque la vitesse devient à nouveau inférieure à celle-ci.

16. Système comprenant un manipulateur ayant au moins un degré de liberté, un dispositif de manipulation conforme à l'une des revendications 1 à 10, fixé sur ce manipulateur un outil monté sur le dispositif de manipulation pour effectuer des travaux par contact ainsi qu'une unité de régulation pour permettre de régler la force exercée par l'outil sur une pièce, cette unité de régulation étant réalisée pour permettre d'obtenir à l'aide du manipulateur un positionnement grossier de l'outil et à l'aide du dispositif de manipulation d'effectuer le positionnement fin et la régulation des forces.

17. Système comprenant un manipulateur ayant au moins un degré de liberté, un dispositif de manipulation conforme à l'une des revendications 1 à 10, fixé sur ce manipulateur, un outil monté sur le dispositif de manipulation pour effectuer des travaux par contact ainsi qu'une unité de régulation pour permettre de régler la force exercée par l'outil sur une pièce, l'unité de régulation étant réalisée pour permettre de procéder à un positionnement de la pièce exclusivement à l'aide du manipulateur, et d'effectuer à l'aide du dispositif de manipulation une mesure de force nécessaires pour la régulation des forces, le comportement élastique du dispositif de manipulation étant susceptible d'être réglé conformément à une valeur de consigne.
